# EUROPÄISCHE PATENTSCHRIFT

(11) **EP 0 896 902 B1**
(45) Veröffentlichungstag und Bekanntmachung des Hinweises auf die Patenterteilung: **26.11.2003**
(21) Anmeldenummer: 98112135.3
(22) Anmeldetag: 01.07.1998
(51) Int. Cl.: B60R 16/02

(54) **Bauteil für ein Kraftfahrzeug, vorzugsweise ein Zylinderkopf einer Brennkraftmaschine**
Vehicle component , in particularly a cylinder head of a combustion engine
Element de véhicule, en particulier une tête de cylindre d'une machine à combustion

(30) Priorität: 13.08.1997 DE 19734970
(43) Veröffentlichungstag der Anmeldung: 17.02.1999
(73) Patentinhaber: Volkswagen Aktiengesellschaft, 38436 Wolfsburg (DE)
(72) Erfinder: Vargas, Julio César, 38124 Braunschweig (DE); Stoppel, Klaus-Dieter, 38444 Wolfsburg (DE)

(56) Entgegenhaltungen:
- DE-A- 3 743 854
- FR-A- 2 592 994
- FR-A- 2 742 587
- US-A- 4 857 003
- US-A- 5 347 969
- US-A- 5 407 371

## Beschreibung

Die Erfindung betrifft ein Bauteil für ein Kraftfahrzeug, vorzugsweise einen Zylinderkopf einer Brennkraftmaschine, wobei das Bauteil zumindest teilweise mit Schmiermittel gefüllt ist, mit wenigstens einem in dem Bauteil angeordneten elektrisch betätigbaren Aggregat, insbesondere ein Magnetventil für insbesondere eine Pumpe-Düse, nach dem Oberbegriff des Anspruchs 1. Ein derartiges Bauteil ist bekannt.

Aus der deutschen Offenlegungsschrift DE 40 13 537 ist eine Kontaktierungsleiste zur gemeinsamen elektrischen Kontaktierung mehrerer elektrisch betätigbarer Aggregate von Brennkraftmaschinen, insbesondere Brennstoffeinspritzventile, beschrieben. In der dort beschriebenen Kontaktierungsleiste sind einerseits in einem Trägerteil und andererseits in einem Deckelteil elektrische Leiter eingelassen. Bei der Montage des Deckelteils auf das Trägerteil wird dann der elektrische Kontakt hergestellt.

Zum einen setzt diese Lösung voraus, daß die elektrischen Leiter in ein Trägerteil derart integrierbar sind, daß sie durch einfaches Montieren des Deckelteils kontaktiert werden können. Sind die elektrisch betätigbaren Aggregate beispielsweise in der Mitte eines Bauteils angeordnet, so müßten in diesem Fall gesonderte Leitungen an den Rand des Bauteils geführt werden. Handelt es sich bei dem Trägerteil um einen Zylinderkopf und bei dem Deckelteil um den Zylinderkopfdeckel, so kann die Kontaktierung problematisch sein, da durch Erschütterungen Rüttelbewegungen zwischen Deckel und Zylinderkopf möglich sind.

Ein weiterer Nachteil ist, daß die Kontaktierung blind erfolgt, d. h. das eine fehlerhafte Kontaktierung nach der Montage des Deckelteils auf dem Trägerteil schwer feststellbar ist.

Femer ist die Anordnung der elektrischen Leitungen in dem Trägerteil bzw. Deckelteil verhältnismäßig teuer. Aus den deutschen Offenlegungsschriften DE 43 32 118 sowie DE 41 18 512 sind elektrisch betätigbare Brennstoffeinspritzventile sowie Verfahren zu deren Verkabelungen bekannt. Diese Verkabelungen sind verhältnismäßig aufwendig.

Aufgabe der Erfindung ist es, ein Bauteil für ein Kraftfahrzeug, vorzugsweise einen Zylinderkopf einer Brennkraftmaschine, wobei das Bauteil zumindest teilweise mit Schmiermittel gefüllt ist, mit wenigstens einem in dem Bauteil angeordneten elektrisch betätigbaren Aggregat, insbesondere ein Magnetventil für insbesondere eine Pumpe-Düse, derart zu verbessern, daß eine möglichst kostengünstige und zuverlässige Kontaktierung des elektrisch betätigbaren Aggregates gegeben ist.

Die Aufgabe wird bei dem eingangs genannten Bauteil erfindungsgemäß durch die kennzeichnenden Merkmale des Anspruchs 1 gelöst. Vorteilhafte Aus- und Weiterbildungen sind in den Unteransprüchen gegeben.

Erfindungsgemäß wird vorgeschlagen, daß eine elektrische Leitung zur Stromversorgung des Aggregats vorgesehen ist, die einerseits mit dem Aggregat elektrisch kontaktierbar ist und andererseits mit einem in sich gegenüber dem Schmiermittel dichten Zentralstecker elektrisch kontaktierbar ist, und der Zentralstecker schmiermitteldicht in einer Öffnung einer den zumindest teilweise mit Schmiermittel gefüllten Raum von einem schmiermittelfreien Raum trennenden Gehäusewand haltbar ist.

Ein weiterer Vorteil der Erfindung besteht darin, daß die elektrischen Leitungen von mehreren elektrisch betätigbaren Aggregaten einem Zentralstecker zugeordnet sind. Die Anzahl der Zentralstecker sowie der Öffnungen in der Gehäusewand, welche den zumindest teilweise mit Schmiermittel gefüllten Raum von dem schmiermittelfreien Raum trennt, wird damit reduziert.

Mit der erfindungsgemäßen Lösung wird eine kostengünstige einfache Leitungszuführung zu einem elektrisch betätigbaren Aggregat geschaffen, ohne daß die Gefahr eines Schmiermittelaustrittes aus dem zumindest teilweise mit Schmiermittel gefüllten Raum in den schmiermittelfreien Raum, oder die Gefahr des Eintritts von das Schmiermittel verdünnenden, verschmutzenden oder andersartig verändernden Mitteln, wie z. B. Feuchtigkeit in den schmiermittelgefüllten Raum besteht.

Sind mehrere elektrisch betätigbare Aggregate vorgesehen, so wird erfindungsgemäß vorgeschlagen, daß mehrere elektrische Leitungen zu einem Verkabelungsmodul zusammenfaßbar sind. Dadurch wird eine übersichtliche Konstruktion geschaffen sowie die Gefahr einer unvorhergesehenen Leitungsbeschädigung ausgeschlossen. Weiter wird vorgeschlagen, daß das Mittel mit denen das Leitungsbündel zusammenfaßbar ist, formstabil ist und in seiner Form an die vorgesehene Einbaulage des Leitungsbündels angepaßt ist.

Das Mittel kann z. B. eine U-förmige oder L-förmige Leiste sein, in die die Leitungen einlegbar sind, und deren offene Seite mit Mitteln zumindest abschnittsweise verschließbar ist. Die Leitungen werden dann durch die Leiste vor äußeren Einflüssen, insbesondere vor Beschädigungen geschützt. Weiterhin trägt die Formstabilität der Leiste zu einer einfachen Montage bzw. Demontage bei, da diese nach dem Einführen durch die Öffnung der Gehäusewand sofort ihre vorgesehene Einbaulage einnimmt.

Vorteilhafterweise sind an der offenen Seite Freiräume vorgesehen, durch die die den elektrisch betätigbaren Aggregaten zugeordneten elektrischen Leitungen herausführbar sind. Die elektrischen Leitungen weisen zweckmäßigerweise an ihren den Aggregaten zugeordneten Enden Stecker auf, die wiederum aus einem Steckkontakt und einem Steckergehäuse bestehen. Die elektrischen Leitungen sind dann einfach mit dem Steckergehäuse und/oder dem Steckkontakt an dem Aggregat haltbar. Der elektrische Kontakt wird mittels der Steckkontaktes hergestellt, der vorteilhafterweise als Hochdruck Steckkontakt ausgebildet ist. Hochdrucksteckkontakte zeichnen sich durch besonders hohe Abziehkräfte aus und tragen somit zu einer sicheren Kontaktierung auch bei Auftreten von Erschütterungen bei.

Der Stecker kann beispielsweise mittels eines Sicherungsmittels, insbesondere einer Verrastung, an dem elektrisch betätigbaren Aggregat haltbar sein. Dies ist insbesondere dann von Vorteil, wenn es sich um ein Magnetventil einer Pumpe-Düse handelt, da dieses erheblichen Erschütterungen unterliegt. Durch die Sicherung des Steckers wird ein Losrütteln der Steckverbindung sicher verhindert. Durch die Verwendung einer Verrastung kann die Kontaktierung in vorteilhafter Weise ohne jegliches Werkzeug vorgenommen werden.

Vorteilhafterweise sind die elektrischen Leitungen mit dem Stecker an einer dem Aggregat zugeordneten Steckkontaktaufnahme befestigbar, wobei die Steckkontaktaufnahmen und/oder der Stecker Hohlräume aufweisen, die beispielsweise zur Aufnahme des jeweiligen anderen Teiles dienen können. In den Hohlräumen sind Ablauföffnungen vorgesehen, die ein Entweichen von sich angesammelten Schmiermittels ermöglichen, damit die Kontaktierung durch das angesammelte Schmiermittel nicht erschwert wird.

Die elektrischen Leitungen sind dann mit den Steckern zum Zwecke einer einfachen Montage und eines einfachen Transportes an der Außenseite der Leiste befestigbar. Nach dem Einführen der Leiste werden die elektrischen Stecker gelöst und mit den elektrisch betätigbaren Aggregaten kontaktiert.

Das Mittel, mit dem das Leitungsbündel zusammenfaßbar ist, und/oder der Zentralstecker und/oder das Steckergehäuse bestehen vorteilhafterweise aus PA 46. PA 46 ist gegenüber handelsüblichen Schmiermitteln, insbesondere Mineralölen als auch organischen Ölen, wie z. B: Rapsöl, chemisch beständig und auch bei höheren Temperaturen formstabil.

Zur eindeutigen Leitungsfestlegung wird weiterhin vorgeschlagen, Mittel vorzusehen, mit denen die Leitungen mittelbar oder unmittelbar an einer Gehäusewand haltbar sind. Die Leitungen sind so eindeutig in ihrer Lage festgelegt und behindern nachfolgende Montagehandlungen nicht.

Die Stecker und/oder die elektrischen Leitungen sind im Kontaktbereich vorteilhafterweise aus Neusilber vorzugsweise CuNi12Zn24 oder CuNi18Zn20 oder aus Gold hergestellt oder weisen Beschichtungen mit den genannten Materialien auf. Durch die Wahl der vorangenannten Werkstoffe wird eine gute elektrische Kontaktierung, auch bei chemisch aggressiven Schmiermitteln, höheren Temperaturen und Schwingbelastungen, sichergestellt.

Die Erfindung wird nachfolgend anhand eines Ausführungsbeispiels näher erläutert. Die Zeichnungen zeigen:
- Figur 1: Zylinderkopf mit verkabelten Magnetventilen;
- Figur 2: Leitungsbündel mit elektrischen Steckern;
- Figur 3: Leitungsbündel mit an dem Leitungsbündel gehaltenen elektrischen Steckern;
- Figur 4: Zentralstecker;
- Figur 5: U-förmige Leiste mit daran angeordneten elektrischen Leitungen; und
- Figur 6: Steckkontaktaufnahme mit Steckkontakt.

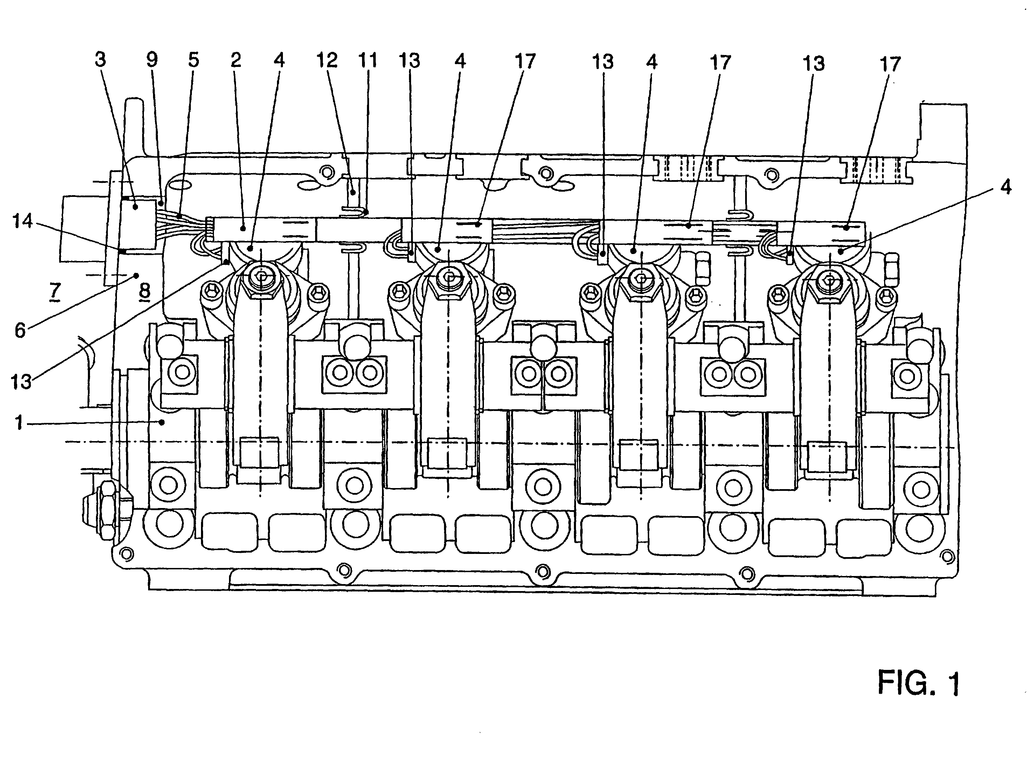

In Figur 1 ist das Bauteil 1, hier ein Zylinderkopf, mit darin angeordneten elektrisch betätigbaren Aggregaten 4, wie z. B. Magnetventilen, insbesondere von Pumpe-Düseelementen zu erkennen. Der Zylinderkopf 1 weist eine Gehäusewand 6 auf, die einen zumindest teilweise mit Schmiermittel gefüllten Raum 8 von einem schmiermittelfreien Raum 7 trennt. Die elektrisch betätigbaren Magnetventile 4 sind mit den elektrischen Leitungen 5; 16; 22 elektrisch leitend verbunden, wobei die elektrischen Leitungen 5; 22; 18 mit dem in sich gedichteten Zentralstecker 3 elektrisch leitend verbunden sind. Der in sich gedichtete Zentralstecker 3 ist mit der Dichtung 14 dichtend in der Öffnung 9 der Gehäusewand 6 gehalten. Der Schmiermittelaustritt aus dem schmiermittelgefüllten Raum 8 in den schmiermittelfreien Raum 7 ist somit sicher verhindert. In umgekehrter Richtung ist auch der Eintritt von das Schmiermittel verschmutzenden oder verdünnenden Medien, wie z. B: Feuchtigkeit, verhindert. Die Dichtung 14 ist als Radialdichtung ausgeführt und weist Lippen auf. Derartige Dichtungen haben sich zum Abdichten von Öffnungen, in Wänden von schmiermittelgefüllten Bauteilen, in der Praxis besonders gut bewährt.

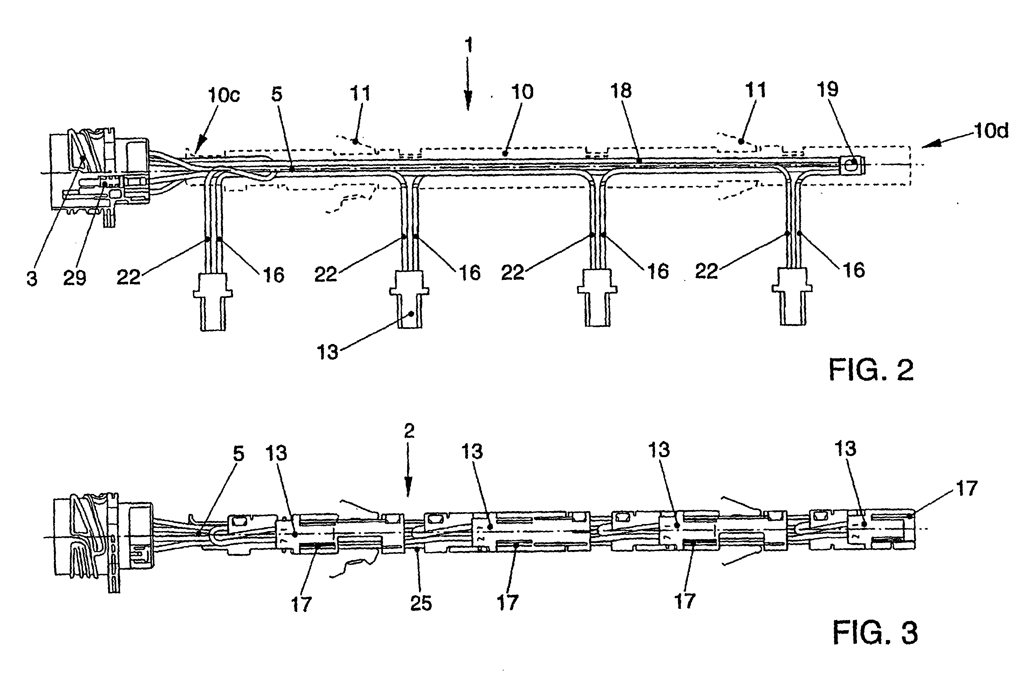

In Figur 2 und 3 ist das Verkabelungsmodul 2 jeweils als Einzelteil erkennbar. Das Verkabelungsmodul 2 weist die elektrischen Leitungen 5, wie z. B. Stromversorgungsleitungen 22 oder Masseleitungen 16, 18 auf. Für jedes elektrisch betätigbare Aggregat 4 zweigen von dem Verkabelungsmodul 2 eine Stromversorgungsleitung 22 und eine Masseleitung 16 ab. Das Material der Isolierung der elektrischen Leitungen 5; 16; 18; 22 ist z.B ETFE oder weist Teflonbestandteile auf, wodurch dieses gegenüber dem Schmiermittel, wie einem Mineralöl oder einem organischen Öl, chemisch resistent und auch gegenüber den auftretenden thermischen Beanspruchungen beständig ist.

Die elektrische Stromversorgungsleitung 22 und die Masseleitung 16 sind an ihrem Ende mit einem Stecker 13 verbunden. Die elektrischen Stromversorgungsleitungen 22 sind mit dem Zentralstecker 3 verbunden, während die Masseleitungen 16 endseitig abisoliert sind und mit Mitteln 19, wie z. B. einem Parallelverbinder elektrisch leitend mit der Masseleitung 18 verbunden sind, welche wiederum mit dem Zentralstecker 3 verbunden ist. Je nach Anzahl der elektrisch betätigbaren Aggregate 4 können mehrere gleiche Stecker 13 vorgesehen werden.

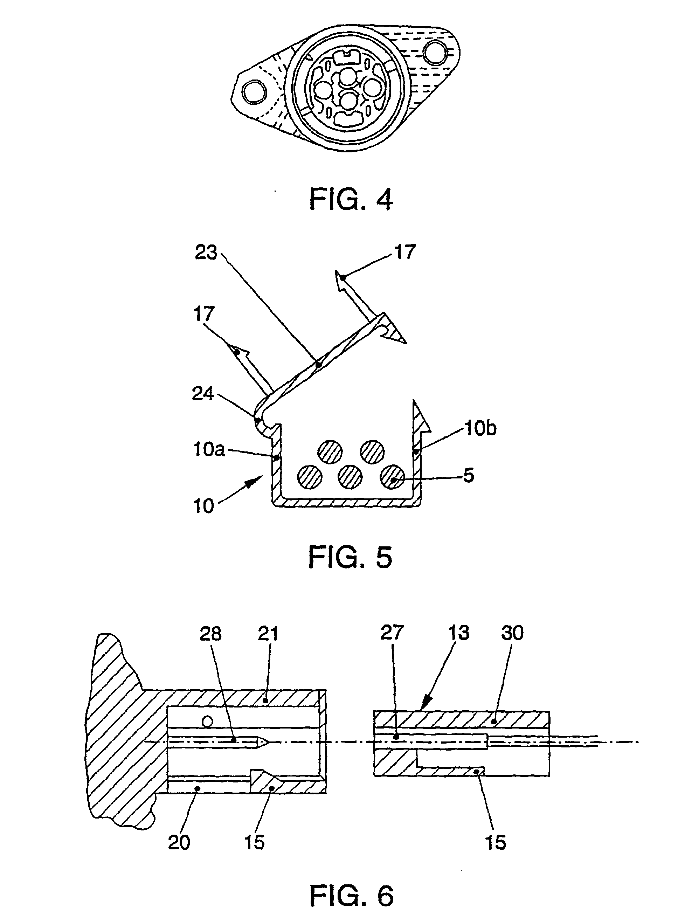

In Figur 5 ist der Querschnitt des Verkabelungsmoduls 2 zu erkennen. Die elektrischen Leitungen 5 sind in die einseitig offene U-förmige Leiste 10 mit den Schenkeln 10a und 10b eingelegt. Die offene Seite der Leiste 10 wird mit den Mitteln 23 zumindest abschnittsweise verschlossen. Die Mittel 23 können beispielsweise eine durch eine Materialschwächung 24 zu dem Schenkel 10a bewegbare Verlängerung sein. Durch die Verdünnung 24 ist die Verlängerung 23 formschlüssig mit der U-förmigen Leiste 10 verbunden und verrastet durch Herunterklappen mit dem anderen Schenkel 10b der U-förmigen Leiste 10. Nach dem Herunterklappen ergibt sich somit ein radial geschlossener Raum, in dem die Leitungen 5 angeordnet sind. Die Leitungen 5 sind somit vor äußeren Einflüssen, wie Beschädigungen sicher geschützt und können in einer vorgegebenen Position gehalten werden. An der bewegbaren Verlängerung 23 sind Mittel 17 vorgesehen, mit denen die Stecker 13 zu Montagezwecken an dem Verkabelungsmodul 2 gehalten werden können. Die elektrischen Stecker 13 werden dann klemmartig zwischen den Mitteln 17, z. B. Federarmen, gehalten. Dabei wird zum Halten der Stecker in vorteilhafter Weise ausgenutzt, das die Stecker 13 entsprechend ihrer zweckmäßigen Bestimmung nämlich, an einem Gegenkontakt gesteckt zu werden, Eigenschaften aufweisen, die ein Befestigen entweder mittelbar über das Steckkontaktgehäuse oder der Steckkontakte selber an dem Gegenkontakt ermöglichen. Die Befestigung des Steckers 13 an dem Verkabelungsmodul 2 könnte nach dem gleichen Prinzip, wie die Befestigung an dem Gegenkontakt, erfolgen. Zwischen der Verlängerung 23 in Längsrichtung des Verkabelungsmoduls 2 sind Freiräume 25 vorgesehen, durch die die elektrischen Leitungen 5, z. B. die Stromversorgungsleitung 22 sowie die Masseleitung 16 mit den endseitig angeordneten Steckern 13 herausgeführt werden können. Für die Montage des Verkabelungsmoduls 2 werden die Stecker 13 außen an dem Leitungsbündel zwischen den Federarmen 17 gehalten. Das so zusammengehaltene Verkabelungsmodul 2 kann dann durch die Öffnung 9 in den Zylinderkopf eingeführt werden. Das Verkabelungsmodul 2 wird dann mit den Mitteln 11, wie z. B. Federelemente in Öffnungen der Gehäusewände 12 befestigt. Anschließend wird der Zentralstecker 3, z. B. mittels Schraubverbindungen in der Gehäusewand 6 verschraubt. Die Kontaktierung kann dann einfach durch Lösen der Stecker 13 von dem Verkabelungsmodul 2 und Kontaktierung an den elektrisch betätigbaren Aggregaten 4 erfolgen.

Liegt ein Defekt der elektrischen Leitungen 5;16;18;22 oder der Steckkontakte 27 vor, so können die Leitungen 5;16;18;22 auch durch Lösen der Stecker 13 von dem Aggregat 4 und Lösen der Mittel 23 von dem Schenkel 10b und anschließendem Herausziehen seperat ausgetauscht werden. Die Verkabelungsleiste 10 verbleibt währenddessen in dem Zylinderkopf 1. Dies ist insbesondere vorteilhaft, da die Verkabelungsleiste bewußt formstabil ausgebildet ist, und den Fall enger Raumverhältnisse im Motorraum nur schwer aus dem Zylinderkopf 1 herausgezogen werden kann. Nach dem Herausziehen der Leitungen 5;16;18;22 können die neuen Leitungen 5;16;18;22 in umgekehrter Reihenfolge der Arbeitsschritte wieder montiert werden. Dabei wird vorteilhaft ausgenutzt, daß die Leitungen 5;16;18;22 in sich bewegbar sind, und somit auch bei engen Raumverhältnissen in die Öffnung 9 eingeführt werden können.

In Figur 4 ist eine Draufsicht auf den Zentralstecker 3 zu erkennen. Die Befestigungsansätze sind gezielt nicht diametral gegenüberliegend angeordnet. Auf diese Weise kann durch eine vorgegebene Anordnung der Befestigungsansätze gezielt verhindert werden, daß ein falscher Zentralstecker bzw. ein falsches Verkabelungsmodul 2 einem falschen Zylinderblock zugeordnet wird, bzw. das Verkabelungsmodul 2 oder der Zentralstecker 3 in einer verkehrten Position, um 180° gedreht, befestigt wird.

Der Zentralstecker 3 ist in sich für ein bestimmte Zylinderzahl codiert. Die Codierung kann beispielsweise durch an bestimmten Stellen angeordneten Nocken erfolgen, die in Nuten eines entsprechen codierten dem fahrzeugseitigen Kabelbaum zugeordneten Kabelbaum Gegensteckers eingreifen, und so die Zuordnung eines falschen Kabelbaumes zu einem Zentralsteckers verunmöglichen.
In Figur 6 ist ein Stecker 13 zu erkennen, der in eine Steckkontaktaufnahme 21 einführbar ist. Die Steckkontaktaufnahme 21 ist dem Aggregat 4 zugeordnet, während der Stecker 13 mit den elektrischen Leitungen 16; 22 elektrisch verbunden ist. Der Stecker 13 besteht aus dem Steckergehäuse 29 und dem weiblichen Steckkontakt 27, der wiederum auf den männlichen Kontakt 28 in der Steckeraufnahme 21 aufschiebbar ist. Die Kontaktverbindung zwischen dem Steckkontakt 27 und dem Kontakt 28 ist als Hochdruckkontaktverbindung ausgebildet. Die Steckeraufnahme 21 weist eine Rastkante 15 auf, hinter der die Kante 26 des Steckergehäuses 29 einrastet. Der Stecker 13 wird somit verliersicher an der Steckeraufnahme 21 gehalten, so daß sich auch bei Auftreten von Erschütterungen der Stecker 13 nicht lösen kann. In der Steckkontaktaufnahme 21 sind Ablauföffnungen 20 vorgesehen, durch die das Schmiermittel ablaufen kann. Die ineinander greifenden Kontakte 27 und 28 sind aus Neusilber, z. B. aus CuNi12Zn24 oder CuNi18Zn20 blank oder mit Gold beschichtet hergestellt. Derartige Materialien sind gegenüber dem Schmiermittel chemisch sehr widerstandsfähig und ermöglichen auch bei höheren Temperaturen und Schwingungsbelastungen eine ausreichend gute elektrische Kontaktierung.

Das Steckergehäuse 29 und/oder Zentralstecker 3 und/oder das Mittel 10 sind aus PA 46 hergestellt. PA 46 ist ein Werkstoff der gegenüber organischen Ölen und Mineralölen chemisch beständig ist und auch bei höheren Temperaturen formstabil ist.

### BEZUGSZEICHENLISTE

- 1: Bauteil, Zylinderkopf
- 2: Verkabelungsmodul
- 3: Zentralstecker
- 4: Aggregat, Magnetventil
- 5: elektrische Leitungen
- 6: Gehäusewand
- 7: schmiermittelfreier Raum
- 8: teilweise mit Schmiermittel gefüllter Raum
- 9: Öffnung
- 10: Mittel, U-förmige Leiste
- 11: Mittel
- 12: Gehäusewand
- 13: Steckkontakt
- 14: Dichtung
- 15: Sicherungsmittel, Verrastung
- 16: Masseleitung
- 17: Mittel
- 18: Masseleitung (gemeinsame)
- 19: Mittel, Parallelverbinder
- 20: Ablauföffnungen
- 21: Steckeraufnahme
- 22: Stromversorgungsleitungen
- 23: Mittel, Verlängerung
- 24: Verdünnung
- 25: Freiräume
- 26: Kante
- 27: Steckkontakt
- 28: Kontakte
- 29: Steckergehäuse
- 30: Hohlraum

## Patentansprüche

1. Bauteil für ein Kraftfahrzeug vorzugsweise ein Zylinderkopf einer Brennkraftmaschine, wobei das Bauteil (1) einem zumindest teilweise mit Schmiermittel befillbaren Raum (8) aufweist, mit wenigstens einem in dem Bauteil (1) angeordneten elektrisch betätigbaren Aggregat (4), insbesondere ein Magnetventil für insbesondere eine Pumpe-Düse, wobei zumindest eine elektrische Leitung (5; 22) zur Stromversorgung des Aggregats (4) vorgesehen ist, die mit dem Aggregat (4) elektrisch verbindbar ist, **dadurch gekennzeichnet, daß** die Leitung (5; 22) mit einem in sich gegenüber dem Schmiermittel dichten Zentralstecker (3) elektrisch verbindbar ist und daß der Zentralstecker (3) schmiermitteldicht in einer Öffnung einer den zumindest teilweise mit Schmiermittel gefüllten Raum (8) von einem schmiermittelfreien Raum (7) trennenden Gehäusewand (6) haltbar ist.

2. Bauteil nach Anspruch 1, **dadurch gekennzeichnet, daß** die elektrischen Leitungen (5) von mehreren elektrisch betätigbaren Aggregaten (4) mit dem Zentralstecker (3) elektrisch verbunden sind.

3. Bauteil nach Anspruch 1 oder 2, **dadurch gekennzeichnet, daß** Mittel (10) vorgesehen sind, mit denen mehrere elektrische Leitungen (5) zu einem Verkabelungsmodul (2) zusammenfaßbar sind.

4. Bauteil nach Anspruch 3, **dadurch gekennzeichnet, daß** das oder die Mittel (10) formstabil ist oder sind und in seiner Form an die vorgesehene Einbaulage des Verkabelungsmoduls (2) angepaßt ist.

5. Bauteil nach Anspruch 3 oder 4, **dadurch gekennzeichnet, daß** das Mittel (10) eine in ihrem Querschnitt U-förmige oder L-förmige Leiste ist, in die die elektrischen Leitungen (5; 22) einlegbar sind und Mittel (23) vorgesehen sind, mit denen die offene Seite der Leiste zumindest abschnittsweise verschließbar ist.

6. Bauteil nach Anspruch 5, **dadurch gekennzeichnet, daß** nach dem Verschließen durch die Mittel (23) der offenen Seite der Leiste an der offenen Seite Freiräume (25) vorgesehen sind, durch die die den elektrisch betätigbaren Aggregaten (4) zugeordneten elektrischen Leitungen (16; 22) herausführbar sind.

7. Bauteil nach einem der Ansprüche 3 bis 6, **dadurch gekennzeichnet, daß** die elektrischen Leitungen (5; 22) mit einem Stecker (13) verbunden sind, wobei der Stecker (13) einen elektrischen Steckkontakt (27) und ein Steckergehäuse (29) aufweist, und die elektrischen Leitungen (5; 22) mit dem elektrischen Steckkontakt (27) oder dem Steckergehäuse (29) an dem Aggregat (4) lösbar haltbar sind.

8. Bauteil nach Anspruch 7, **dadurch gekennzeichnet, daß** der elektrische Steckkontakt (27) mit einer Hochdruckkontakverbindung an dem Aggregat haltbar ist.

9. Bauteil nach Anspruch 7 oder 8, **dadurch gekennzeichnet, daß** der Stecker (13) mit einem Sicherungsmittel (15), insbesondere einer Verrastung, an dem Aggregat (4) haltbar ist.

10. Bauteil nach einem der Ansprüche 7, 8 oder 9, **dadurch gekennzeichnet,, daß** der Stecker (13) an einer dem Aggregat (4) zugeordneten Steckeraufnahme (21) haltbar ist und der Stecker (13) und/oder die Steckeraufnahme (21) einen Hohlraum (30) aufweisen und in dem Hohlraum (30) eine Ablauföffnung (20) vorgesehen ist.

11. Bauteil nach einem der vorhergehenden Ansprüche, **dadurch gekennzeichnet, daß** der Zentralstecker (3) und/oder das Mittel (10) und/oder das Steckergehäuse (29) aus einem temperaturbeständigen und gegenüber dem Schmiermittel chemisch resistenten Werkstoff, insbesondere aus PA 46, besteht.

12. Bauteil nach einem der Ansprüche 1 bis 11, **dadurch gekennzeichnet, daß** Mittel (11) vorgesehen sind, mit denen die Leitungen (5) unmittelbar oder mittelbar an einer Gehäusewand (6) haltbar sind.

13. Bauteil nach einem der vorangegangenen Ansprüche, **dadurch gekennzeichnet, daß** die elektrischen Leitungen (5; 16; 18; 22) im Bereich der elektrischen Kontaktierung aus Neusilber, vorzugsweise aus CuNi12Zn24 oder CuNi18Zn20 oder aus Gold bestehen, oder mit einer der Materialien beschichtet ist.

## Claims

1. Component for a motor vehicle, preferably a cylinder head of an internal combustion engine, the component (1) having a space (8) which can be at least partially filled with lubricant, having at least one electrically actuable assembly (4) which is arranged in the component (1) , in particular a solenoid valve for, in particular, a pump nozzle, at least one electric line (5; 22) which can be electrically connected to the assembly (4) being provided for supplying power to the assembly (4), **characterized in that** the line (15; 22) can be electrically connected to a central plug (3) which is sealed with respect to the lubricant, and **in that** the central plug (3) can be held in a manner sealed against lubricant in an opening of a housing wall (6) which separates the space (8) which is at least partially filled with lubricant from a space (7) which is lubricant-free.

2. Component according to Claim 1, **characterized in that** the electric lines (5) are electrically connected to the central plug (3) by a plurality of electrically actuable assemblies (4).

3. Component according to Claim 1 or 2, **characterized in that** means (10) are provided with which a plurality of electric lines (5) can be combined to form a cabling module (2).

4. Component according to Claim 3, **characterized in that** the means (10) is or are dimensionally stable and adapted in shape to the envisaged installation position of the cabling module (2).

5. Component according to Claim 3 or 4, **characterized in that** the means (10) is a strip which is U-shaped or L-shaped in cross section and into which the electric lines (5; 22) can be inserted, and means (23) are provided with which the open side of the strip can be closed at least in some sections.

6. Component according to Claim 5, **characterized in that**, after the open side of the strip is closed by the means (23), clearances (25) are provided on the open side, through which the electric lines (16; 22) assigned to the electrically actuable assemblies (4) can be led out.

7. Component according to one of Claims 3 to 6, **characterized in that** the electric lines (5; 22) are connected to a plug (13), the plug (13) having an electric plug contact (27) and a plug housing (29), and the electric lines (5; 22) being held releasably on the assembly (4) by the electric plug contact (27) or the plug housing (29).

8. Component according to Claim 7, **characterized in that** the electric plug contact (27) can be held on the assembly by a high-pressure contact connection.

9. Component according to Claim 7 or 8, **characterized in that** the plug (13) can be held on the assembly (4) by a securing means (15), in particular a snap-in fastening.

10. Component according to one of Claims 7, 8 or 9, **characterized in that** the plug (13) can be held on a plug holder (21) assigned to the assembly (4), and the plug (13) and/or the plug holder (21) have/has a cavity (30) and an outlet opening (20) is provided in the cavity (30) .

11. Component according to one of the preceding claims, **characterized in that** the central plug (3) and/or the means (10) and/or the plug housing (29) consist/consists of a temperature-resistant material which is chemically resistant to the lubricant, in particular of PA 46.

12. Component according to one of Claims 1 to 11, **characterized in that** means (11) are provided with which the lines (5) can be held directly or indirectly on a housing wall (6).

13. Component according to one of the preceding claims, **characterized in that** the electric lines (5; 16; 18; 22) in the region of the electric contact connection consist of nickel silver, preferably of CuNi12Zn24 or CuNi18Zn20 or of gold, or are coated with one of the materials.

## Revendications

1. Composant de véhicule, de préférence une culasse d'un moteur à combustion interne, dans lequel le composant (1) présente un espace (8) pouvant être rempli au moins partiellement de lubrifiant, avec au moins une unité (4) disposée dans le composant (1) et actionnable électriquement, en particulier une électrovanne pour notamment un injecteur de pompe, au moins une conduite électrique (5 ; 22) étant prévue pour l'alimentation en courant de l'unité (4), et pouvant être connectée électriquement à l'unité (4), **caractérisé en ce que** la conduite (5 ; 22) peut être connectée électriquement à un connecteur central (3) étanche en soi par rapport au lubrifiant, et **en ce que** le connecteur central (3) peut être maintenu de manière étanche au lubrifiant dans une ouverture d'une paroi du boîtier (6) séparant l'espace (8) rempli au moins partiellement de lubrifiant d'un espace (7) exempt de lubrifiant.

2. Composant selon la revendication 1, **caractérisé en ce que** les conduites électriques (5) sont connectées électriquement au connecteur central (3) par plusieurs unités (4) actionnables électriquement.

3. Composant selon la revendication 1 ou 2, **caractérisé en ce que** des moyens (10) sont prévus avec lesquels plusieurs conduites électriques (5) peuvent être rassemblées pour former un module de câblage (2).

4. Composant selon la revendication 3, **caractérisé en ce que** le ou les moyens (10) a ou ont une forme stable et a ou ont une forme adaptée à la position d'installation prévue du module de câblage (2).

5. Composant selon la revendication 3 ou 4, **caractérisé en ce que** le moyen (10) est une barre de section transversale en forme de U ou en forme de L, dans laquelle les conduites électriques (5 ; 22) peuvent être posées et des moyens (23) sont prévus, avec lesquels le côté ouvert de la barre peut être fermé au moins en partie.

6. Composant selon la revendication 5, **caractérisé en ce qu'**après la fermeture par les moyens (23) du côté ouvert de la barre, des espaces libres (25) sont prévus du côté ouvert, à travers lesquels on peut faire passer les conduites électriques (16 ; 22) associées aux unités (4) actionnables électriquement.

7. Composant selon l'une quelconque des revendications 3 à 6, **caractérisé en ce que** les conduites électriques (5 ; 22) sont connectées à un connecteur (13), le connecteur (13) présentant un contact enfichable électrique (27) et un boîtier de connecteur (29), et les conduites électriques (5 ; 22) pouvant être maintenues de manière détachable avec le contact enfichable électrique (27) ou avec le boîtier de connecteur (29) sur l'unité (4).

8. Composant selon la revendication 7, **caractérisé en ce que** le contact enfichable électrique (27) peut être maintenu sur l'unité par une connexion de contact haute pression.

9. Composant selon la revendication 7 ou 8, **caractérisé en ce que** le connecteur (13) peut être maintenu avec un moyen de fixation (15), en particulier un enclenchement, sur l'unité (4).

10. Composant selon l'une quelconque des revendications 7, 8 ou 9, **caractérisé en ce que** le connecteur (13) peut être maintenu sur un logement de connecteur (21) associé à l'unité (4) et le connecteur (13) et/ou le logement de connecteur (21) présentent un espace creux (30) et une ouverture de sortie (20) est prévue dans l'espace creux (30) .

11. Composant selon l'une quelconque des revendications précédentes, **caractérisé en ce que** le connecteur central (3) et/ou le moyen (10) et/ou le boîtier de connecteur (29) se compose d'un matériau résistant à la température et résistant chimiquement au lubrifiant, en particulier de PA 46.

12. Composant selon l'une quelconque des revendications 1 à 11, **caractérisé en ce que** des moyens (11) sont prévus avec lesquels les conduites (5) peuvent être maintenues directement ou indirectement sur une paroi du boîtier (6).

13. Composant selon l'une quelconque des revendications précédentes, **caractérisé en ce que** les conduites électriques (5 ; 16 ; 18 ; 22) se composent dans la région du contact électrique, d'argentan, de préférence de CuNi12Zn24 ou de CnNi18Zn20 ou d'or, ou sont revêtues de l'un de ces matériaux.
